# EUROPÄISCHE PATENTANMELDUNG

(11) **EP 0 557 768 A2**
(43) Veröffentlichungstag der Anmeldung: **01.09.1993**
(21) Anmeldenummer: 93101892.3
(22) Anmeldetag: 06.02.1993
(51) Int. Cl.: B62D 1/18, F16C 33/08, F16C 25/04

(54) **Lagerung des Mantelrohres einer teleskopierbaren Lenksäule**

(30) Priorität: 28.02.1992 DE 4206178
(71) Anmelder: LEMFOERDER METALLWAREN AG., D-49441 Lemförde (DE)
(72) Erfinder: Eichholz, Raimund, Dipl.-Ing., W-4500 Osnabrück (DE); Schüller, Klaus, Dipl.-Ing., W-4513 Belm (DE)
(74) Vertreter: Bruse, Willy Hans Heinrich

(57) **Zusammenfassung**

Die Erfindung betrifft die Lagerung des Mantelrohres (1) einer teleskopierbaren Lenksäule, bei der das Mantelrohr (1) in Achsrichtung gleitend beweglich in einem Gehäuse (2) an der Karosserie abgestützt ist. Zur Erzielung einer spielfreien Lagerung ist das Mantelrohr (1) wenigstens in einer in Längsrichtung geschlitzten Lagerbuchse (3) aus einem nichtmetallischen Werkstoff axial beweglich in dem Gehäuse (2) gelagert, wobei sich diese Lagerbuchse (3) mit einer im Querschnitt konischen Außenkontur (5) unter axialer Federbelastung reibschlüssig haftend gegen einen Innenkonus (6) des Gehäuses (2) abstützt.

## Beschreibung

Die Erfindung betrifft die Lagerung des Mantelrohres einer teleskopierbaren Lenksäule nach dem Oberbegriff des Patentanspruches 1.

Diese Lagerung ist aus der DE-OS 38 37 190 bekannt. In dem Mantelrohr ist das obere Teil einer teleskopierbaren Lenkwelle drehbar gelagert, auf dem das Lenkrad befestigt ist, so daß das Lenkrad, das obere Teil der Lenkwelle und das Mantelrohr bzw. das obere Teil eines ebenfalls teleskopierbaren, mehrteiligen Mantelrohres gemeinsam in Achsrichtung der Lenksäule verstellbar sind. Die eingestellte Position des Lenkrades wird bei der bekannten Anordnung durch eine formschlüssige Rastung ineinandergreifender Verzahnungen am Umfang des Mantelrohres und an betätigbaren, im Gehäuse beweglich angeordneten Sperrgliedern fixiert. Anstelle einer solchen Rastung sind auch reibschlüssig wirksame Klemmelemente zur Sicherung der eingestellten Positionen, zum Beispiel aus der US-PS 4,363,499 und aus anderen Druckschriften, bekannt.

Aufgabe der Erfindung ist eine den Komfort verbessernde Gestaltung einer solchen Lagerung des Mantelrohres in einem an der Karosserie festen Gehäuse, die keine Justierung der Lagerung erfordert und trotzdem, vor allem bei der Verstellung unabhängig von Temperaturunterschieden und eventuellem Verschleiß, radial spielfrei ist.

Die Erfindung löst diese Aufgabe durch eine Ausbildung mit Merkmalen nach dem Kennzeichen des Patentanspruches 1.

Eine solche Lagerung ist gleichbleibend leichtgängig und im Hinblick auf ein eventuelles Radialspiel selbsttätig nachstellend. Der zur längenverschieblichen Positionsänderung des Lenkrades durch den Fahrzeuglenker erforderliche Kraftaufwand verändert sich auch unter dem Einfluß tiefer Temperaturen nicht nennenswert. Der selbstnachstellende Radialspielausgleich sorgt auch nach langer Lebensdauer für eine spielfreie Lagerung des Mantelrohres in dem Gehäuse, unabhängig von der Wirksamkeit der Mittel zur Fixierung der eingestellten Lenkradposition.

Bei einer bevorzugten Ausführungsform weist die Lagerbuchse an ihrer äußeren Konusfläche eine größere Oberflächenrauhigkeit auf als an der inneren, auf dem Mantelrohr axial beweglichen Gleitfläche. Letztere kann ebenso wie die Oberfläche des Mantelrohres in diesem Bereich besonders für eine axiale Gleitbewegung vorbehandelt und gegebenenfalls mit einem Werkstoff beschichtet sein, welcher einen geringen Reibungskoeffizienten aufweist, so daß die Axialbewegung des Mantelrohres in der Lagerbuchse zur Verstellung der Lenkradposition leichtgängig ist. Die Lagerbuchse wird durch Federkraft in Richtung zur theoretischen Konusspitze permanent belastet, die sich einerseits gegen die Stirnfläche der Lagerbuchse und andererseits gegen eine innere Schulter im Gehäuse abstützt. Die von den Federkräften über die konische Kontur der Lagerbuchse herrührenden Radialkräfte haben das Bestreben, den Innendurchmesser der mit dem Außenumfang gleichbleibend anliegenden Lagerbuchse zu verringern und bewirken dadurch den Spielausgleich. Zur Förderung dieser Wirkung kann die Lagerbuchse von beiden Stirnseiten her wenigstens einen nicht durchgehenden Schlitz aufweisen, die beide achsparallel zueinander angeordnet sind.

Eine weitere Verbesserung der angestrebten Wirkung kann dadurch erreicht werden, daß das Mantelrohr mehrere in dem Gehäuse hintereinander angeordnete Lagerbuchsen durchsetzt, so daß das Mantelrohr an mehreren Stellen spielfrei in dem Gehäuse abgestützt ist. Auch diese Lagerbuchsen greifen mit einer außenkonischen Kontur in einen Innenkonus in dem Gehäuse ein, so daß beide Konusflächen unter axialer Federbelastung reibschlüssig haftend gegeneinandergedrückt werden. Die theoretischen Kegelspitzen des Konus jeder Lagerbuchse sind dabei vorteilhaft nach oben zum Lenkrad hin gerichtet, um zu erreichen, daß das Eigengewicht der Lagerbuchse der Federbelastung entgegenwirkt und ausschließlich Federkräfte die konischen Flächen der Lagerbuchsen und des Innenkonus am Gehäuse aneinanderpressen. Verklemmungen der Lagerbuchsen in ihren Gehäuseausnehmungen sollen dadurch verhindert werden. Wenigstens eine von mehreren Lagerbuchsen kann aber auch mit der theoretischen Kegelspitze ihres Konus entgegengesetzt gerichtet angeordnet werden, um auf diese Weise einem möglichen Radialspiel entgegenzuwirken.

Auf der Zeichnung ist ein Ausführungsbeispiel der Erfindung in zwei möglichen Varianten dargestellt. Es zeigen:
- Figur 1: einen Schnitt in einer Achsebene durch die Lagerung,
- Figur 2: einen Schnitt nach der Linie II - II in Figur 1 und
- Figur 3: einen Schnitt entsprechend Figur 1 eines abgeänderten Ausführungsbeispieles.

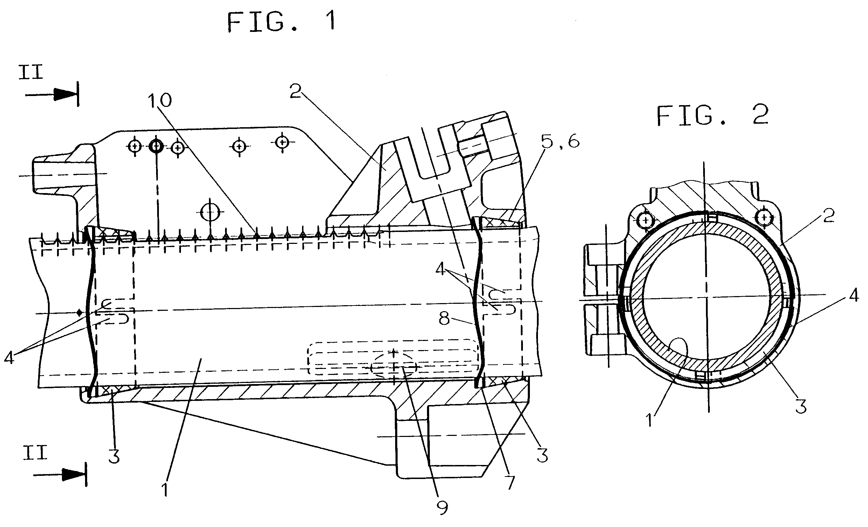

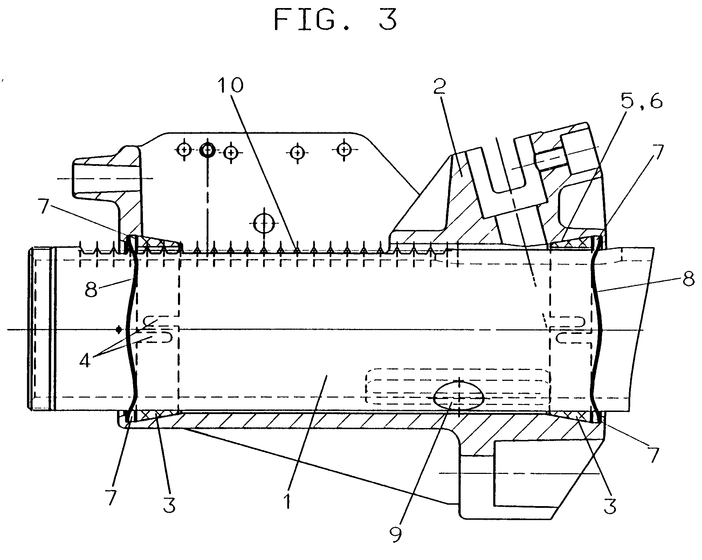

Das Mantelrohr 1 ist in einem an der Karosserie festen Gehäuse 2 in axialer Richtung verschieblich gelagert. Innerhalb des Gehäuses 2 durchsetzt das Mantelrohr 1 zwei mit einem axialen Abstand voneinander angeordnete Lagerbuchsen 3 aus einem nichtmetallischen Werkstoff, insbesondere einem Kunststoff, welche in axialer Richtung geschlitzt sind oder von beiden Stirnseiten ausgehende Schlitze 4 aufweisen, die achsparallel zueinander angeordnet sind. Jeder Lagerring weist eine konische Außenkontur 5 auf, die sich gegen einen komplementären Innenkonus 6 in einer Ausnehmung 7 des Gehäuses 2 abstützt. Die Stirnfläche der Lagerbuchse 3 wird auf der Seite des größeren Konusdurchmessers durch eine gewellte Ringfeder 8 permanent belastet, die sich andererseits gegen eine innere Ringschulter in der Ausnehmung 7 abstützt, so daß diese gewellte Ringfeder 8 die konischen Flächen am Außenumfang der Lagerbuchse 3 und an der Innenseite der Ausnehmung 7 axial gegeneinanderdrückt, so daß radiale Kräfte auf die Lagerbuchse 3 wirksam werden, wodurch Lagerspiel zwischen dem Mantelrohr 1, der Lagerbuchse 3 und dem Gehäuse 2 ausgeglichen werden. Die Oberflächenrauhigkeit der Lagerbuchse 3 an der Außenseite ist größer als die Oberflächenrauhigkeit für die Gleitbewegung an der Innenseite der Lagerbuchse 3, so daß die Lagerbuchse 3 durch die größere Oberflächenrauhigkeit an dem Gehäuse 2 festgehalten wird und in jedem Falle auf der Oberfläche des Mantelrohres 1 gleitet. In dem Beispiel der Figur 1 sind zwei Lagerbuchsen 3 mit einem axialen Abstand voneinander gleichsinnig angeordnet, so daß die theoretischen Kegelspitzen des Außenkonus beider Lagerbuchsen 3 nach oben zum Lenkrad hin gerichtet sind und das Eigengewicht der Lagerbuchsen 3 den Federkräften der Ringfeder 8 entgegenwirken. Abweichend davon sind die Lagerbuchsen 3 bei dem Ausführungsbeispiel in Figur 3 mit den theoretischen Kegelspitzen der Außenkonusflächen gegeneinandergerichtet, bei einer im übrigen gleichen Gestaltung des Lagers.

Eine Verdrehsicherung des Mantelrohres 1 gegenüber dem Gehäuse 2, welche axiale Bewegungen des Mantelrohres gegenüber dem Gehäuse zuläßt, ist in den Figuren 1 und 3 mit den strichpunktierten Linien 9 angedeutet. Zur Fixierung der eingestellten Position des Lenkrades und damit des Mantelrohres 1 gegenüber dem Gehäuse 2 greift in eine am Umfang des Mantelrohres 1 vorgesehene Verzahnung 10 ein - aus Gründen der besseren Übersicht auf der Zeichnung nicht dargestelltes - Rastelement mit einer komplementären Verzahnung ein. Dieses in dem Gehäuse 2 beweglich gelagerte Rastelement ist durch eine äußere Handhabe betätigbar, wie es an sich bekannt ist.

| BEZUGSZEICHENLISTE: | | | |
|---|---|---|---|
| 1 | Mantelrohr | 6 | Innenkonus |
| 2 | Gehäuse | 7 | Ausnehmung |
| 3 | Lagerbuchse | 8 | Ringfeder |
| 4 | Schlitz | 9 | Verdrehsicherung |
| 5 | Außenkonus | 10 | Verzahnung |

## Patentansprüche

1. Lagerung des Mantelrohres einer teleskopierbaren Lenksäule, bei der das Mantelrohr in Achsrichtung gleitend beweglich in einem Gehäuse an der Karosserie abgestützt ist, dadurch gekennzeichnet, daß das Mantelrohr (1) wenigstens eine in Längsrichtung geschlitzte Lagerbuchse (3) aus einem nichtmetallischen Werkstoff axial beweglich durchsetzt, die sich mit einer im Querschnitt konischen Außenkontur (5) unter axialer Federbelastung (8) reibschlüssig haftend gegen einen Innenkonus (6) des Gehäuses (2) abstützt.

2. Lagerung nach Anspruch 1, dadurch gekennzeichnet, daß die Lagerbuchse (3) an ihrer äußeren Konusfläche eine größere Oberflächenrauhigkeit aufweist als an der inneren, auf dem Mantelrohr (1) axial beweglichen Gleitfläche.

3. Lagerung nach den Ansprüchen 1 und 2, dadurch gekennzeichnet, daß die Lagerbuchse (3) durch eine sich einerseits gegen deren Stirnfläche an der Seite mit dem größeren Konusdurchmesser und andererseits gegen das Gehäuse (2) abstützende Feder (8) permanent belastet ist.

4. Lagerung nach den Ansprüchen 1 bis 3, dadurch gekennzeichnet, daß die Lagerbuchse (3) an beiden Stirnseiten wenigstens einen nicht durchgehenden Schlitz (4) aufweist, die beide achsparallel zueinander angeordnet sind.

5. Lagerung nach den Ansprüchen 1 bis 4, dadurch gekennzeichnet, daß das Mantelrohr (1) mehrere in dem Gehäuse (2) hintereinander angeordnete Lagerbuchsen (3) durchsetzt.

6. Lagerung nach den Ansprüchen 1 bis 5, dadurch gekennzeichnet, daß die theoretischen Kegelspitzen des Konus der Lagerbuchsen (3) nach oben zum Lenkrad gerichtet sind.

7. Lagerung nach den Ansprüchen 1 bis 6, dadurch gekennzeichnet, daß wenigstens eine von mehreren Lagerbuchsen (3) mit der theoretischen Kegelspitze ihres Konus entgegengesetzt gerichtet angeordnet ist.
